# EUROPEAN PATENT SPECIFICATION

(11) **EP 4 472 882 B1**
(45) Date of publication and mention of the grant of the patent: **21.01.2026**
(21) Application number: 23704830.1
(22) Date of filing: 26.01.2023
(51) Int. Cl.: B62K 21/12, B62K 23/06, B62L 3/02

(54) **HANDLEBAR WITH INTEGRATED BRAKES FOR A WHEELED VEHICLE, AND WHEELED VEHICLE EQUIPPED WITH SUCH HANDLEBAR**
LENKER MIT INTEGRIERTEN BREMSEN FÜR EIN RADFAHRZEUG UND RADFAHRZEUG MIT EINEM SOLCHEN LENKER
GUIDON AVEC FREINS INTÉGRÉS POUR UN VÉHICULE À ROUES, ET VÉHICULE À ROUES ÉQUIPÉ D'UN TEL GUIDON

(30) Priority: 04.02.2022 IT 202200002006
(43) Date of publication of application: 11.12.2024
(73) Proprietor: Aintro S.r.l., 09134 Cagliari (IT)
(72) Inventor: ORRU', Andrea, 09134 CAGLIARI (IT)
(74) Representative: Perronace, Andrea
(86) International application number: PCT/IB2023/050670
(87) International publication number: WO 2023/148584

(56) References cited:
- EP-A2- 0 875 443
- DE-A1- 102019 206 753
- DE-U1- 9 013 174
- US-A1- 2021 380 079
- US-B1- 6 502 675
- US-B1- 9 268 354

## Description

The present invention relates to a handlebar with integrated brakes for a wheeled vehicle, and a vehicle equipped with such a handlebar.

### Background art

To date, the brake control of bikes (or other wheeled vehicles), from professional racing bikes to children's bikes, has been conceived as an appendix to be applied to the handlebar, complementary thereto. In particular, the brake control of bikes has always been designed and built as an assembly consisting of two elements, the lever and the support on which to pivot it, and such a support is the element which is fastened to the handlebar: to date, all brake controls have always required a support consisting of a dedicated component coupled with the levers.

The handlebar, in turn, has always been nothing more than a simple tube on which to mount the brakes, rest the hands and direct one's own vehicle.

Only in the last decade, there has been a change in these two elements, brakes and handlebars, , with new shapes, materials and accessories, but always consisting of individual pieces to be assembled according to the needs and taste of the purchaser and the availability of the individual pieces: in any case, brakes to be mounted on the handlebar by means of the support.

The production of brakes by means of these two elements, lever and support, results in increased production and maintenance costs, with problems associated with components' wear and the risk of breaking of the supports due to possible incidents.

The same applies to all the other currently external accessories, which face wear, breaking, oxidization, theft.

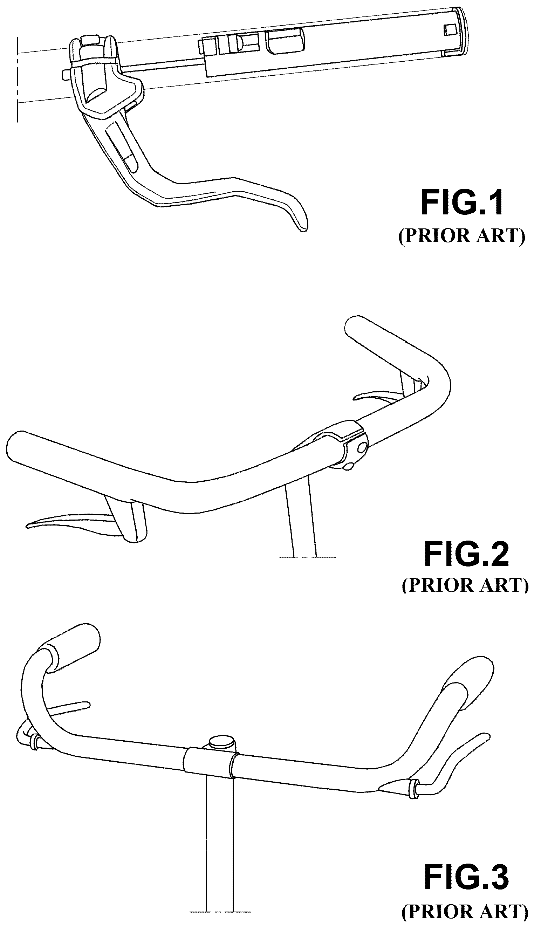

Figure 1 shows a Magura^{®} brake, which is a hydraulic brake using supports fixed to the handlebar. The core of such a brake is a cylinder located in a concealed manner in the area of the handlebar grip. Also the brakes' tubes are arranged inside the handlebar: they are guided through the handlebar coupling unit and the steering tube through specific holes in the handlebar.

Figure 2 shows a known brake with a support that comes out of the handlebar while the cables run inside. The utility model in DE212008000049U1 better shows a system of this type, in which the pull of the brakes occurs by means of a system located inside the handlebar tube, along which the cable itself with sheath also runs; in the case of our handlebar, the sheath and the adjustment system are applied externally to the handlebar, in the rear part thereof, allowing only the cable fastened to the lever to run inside, which lever, being a common lever available on the market, performs its conventional function as well as the brake cable and the tension regulator.

Figure 3 shows a so-called "rod" brake, which is known not to use brake cables, but rigid mechanisms. Moreover, rod brakes must have a particular shape of the lever in order to operate. Patent documents GB191121969A and US1034674A show rod brakes.

The solution in patent EP1683717B1 (see Fig. 4) involves the brake lever moved inside the handlebar, fastening it with a pin, while the support - which is also fundamental for adjusting the pull - remains mounted on the outside of the handlebar of which it characterizes the shape and function.

Document US7240772B2 (see Fig. 5) integrates the brake control in the end portion of the handlebar, coaxially. The fulcrum of the lever is outside the handlebar, even though the cable runs therein and then comes out, but always in front of the handlebar.

Document US4966047A shows cables running inside the handlebar and coming out at the back, as those of the user, but the actuation is rotary, there are no levers.

Document US8438946B2 actually uses two tubes, an internal one and an external one. With respect to the internal one, the brake controls are mounted in a classic manner. The external one does nothing more than cover the internal one and part of the control so that the cables do not travel exposed.

The document US 9 268 354 B1 discloses a handlebar according to the preamble of claim 1.

### Scope and object of the invention

The object of the present invention is to provide a handlebar with integrated hydraulic brakes for wheeled vehicles, and a wheeled vehicle with such handlebars, which completely or partly solves the problems and overcomes the drawbacks of the prior art.

The subject-matter of this invention is a handlebar for wheeled vehicle, and a wheeled vehicle equipped with such handlebars, according to the attached claims.

### Detailed description of embodiments of the invention

### List of figures

The invention will now be described by way of illustration but not by way of limitation, with particular reference to the figures in the accompanying drawings, in which:
- figure 1 shows a Magura^{®} brake, as available on the Internet and commented above;
- figure 2 shows a known brake with a support coming out of the handlebar while the cables run therein, as illustrated above;
- figure 3 shows the solution of the patent document of a so-called "rod" brake mentioned above;

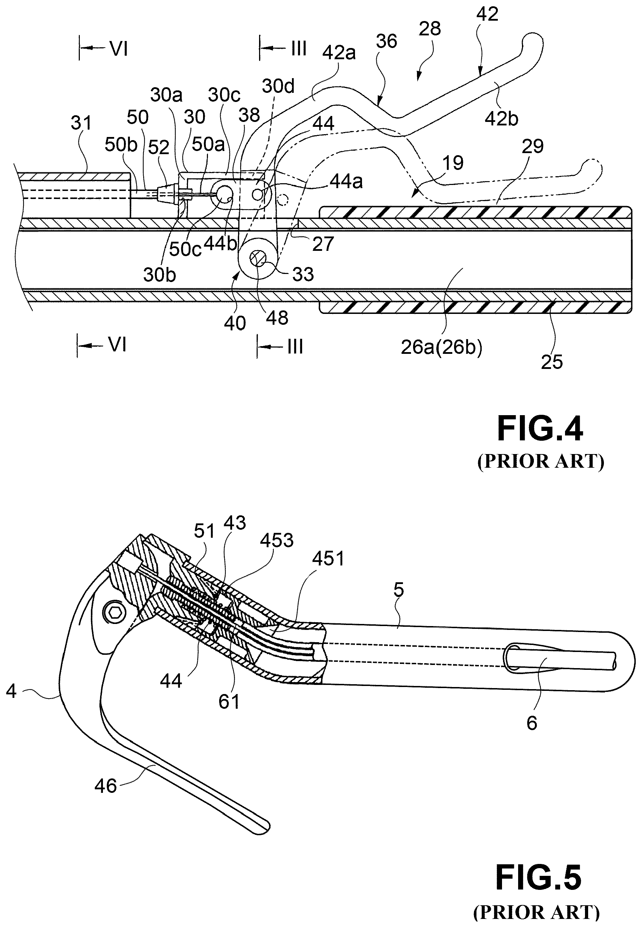

- figure 4 shows the solution of the patent document EP1683717B1, commented above;
- figure 5 shows the solution of patent document US7240772B2, commented above;
- figure 6 shows a section of one of the two arms of a handlebar according to an embodiment of the invention;
- figure 7 shows in greater detail the brake lever according to fig. 6, both in horizontal section (top) and vertical section (bottom);
- figure 8 still shows the section of Fig. 6 but without the lever and the piston, to illustrate the various cavities that receive them;
- figure 9 shows a view of two elements completing the handlebar as illustrated in Fig. 8;
- figure 10 shows the section B-B of Fig. 8;
- figure 11 shows a portion of the section of Fig. 8 relating to the piston housing;
- figure 12 shows a solid view (top) and a cross-sectional view (bottom) of an embodiment of the piston used in the invention, including a thrust ball that transmits motion from the lever to the piston;
- figure 13 shows a detail of the piston thrust means (top) with the section of the gasket (bottom left) and the section of the threaded cap (bottom right) ;
- figure 14 shows a section of the fully assembled piston of the previous figures; and
- figure 15 shows an example of a bicycle handlebar part with connection to the frame of the same bicycle (not shown).

It is worth noting here that elements of different embodiments may be combined together to provide further embodiments without restrictions respecting the technical concept of the invention, as the person skilled in the art will effortlessly understand from the description.

The present description also relates to the prior art for the implementation thereof, regarding detailed features not described, such as elements of minor importance usually used in the prior art in solutions of the same type.

When an element is introduced, it is always understood that there may be "at least one" or "one or more".

When elements or features are listed in this description, it means that the finding according to the invention "comprises" or alternatively "consists of" such elements.

### Embodiments

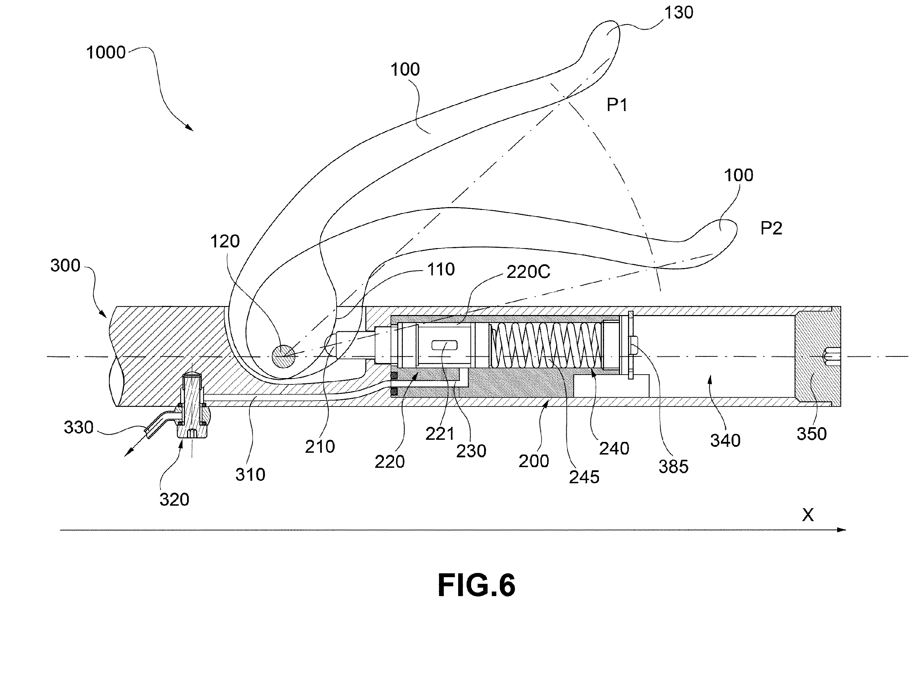

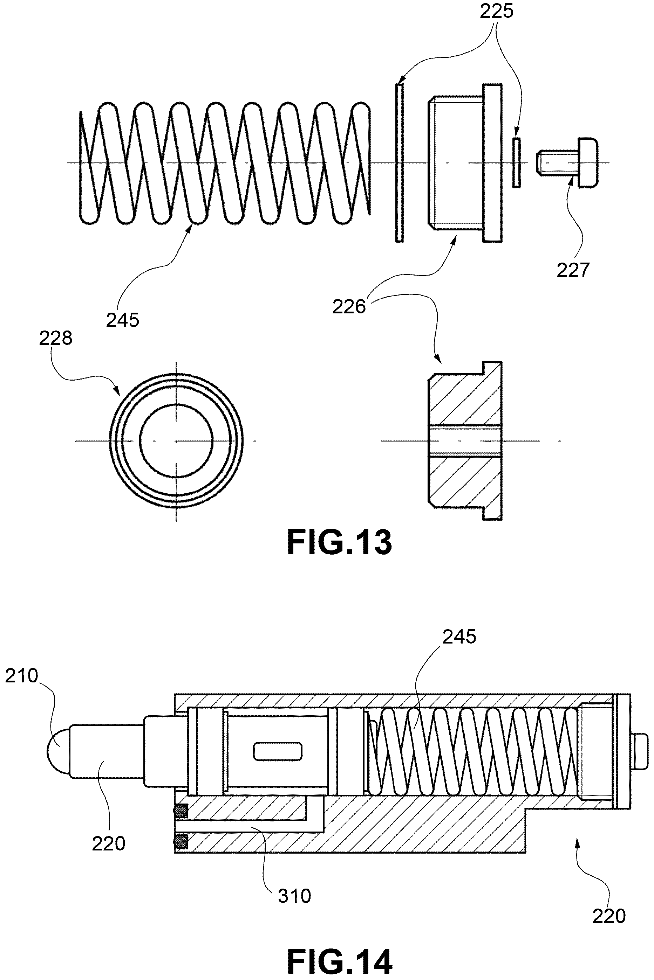

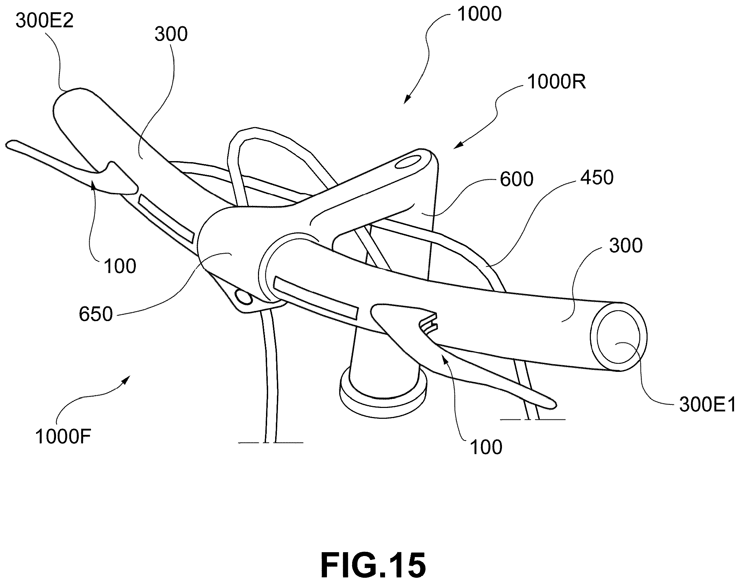

Referring to Fig. 6 and Fig. 15, the handlebar 1000 with integrated hydraulic brakes for wheeled vehicle (not shown entirely) according to an embodiment of the invention includes a tubular handlebar body 300 extending from a first end 300E1 to a second end 300E2 along an extension line X. The handlebar 1000 includes one or more brakes on a front side 1000F of the handlebar body, opposite to a rear side 1000R of the handlebar body. In figures 6-14 only one side of the handlebar body is shown, in section, but in most cases, there are two grippable sides and two brakes as on common bicycles, see Fig. 15. In this figure, a portion of bicycle is shown, where 600 indicates a connecting element of the tubular handlebar body 300 to the bicycle (not shown) while 650 indicates the gripping sleeve to the tubular handlebar 1000 of the connecting element 600; finally, 450 indicates the oil fitting that ends in the brake caliper (not shown) or other braking device on the wheel of the vehicle (in this specific case, a bicycle).

This oil fitting 450 does not necessarily have to come out of the handlebar in the position shown in Fig. 15 and then continue up to the brake externally. The exit point can be anywhere on the handlebar 1000 or it can be channeled in various ways into the bicycle frame until it reaches a point on the frame closer to the brake, from where it will come out.

It should be specified here that "brake" in the present description normally refers to the lever actuation part 100 on the tubular handlebar body 300 and not the brake caliper on a wheel of the wheeled vehicle.

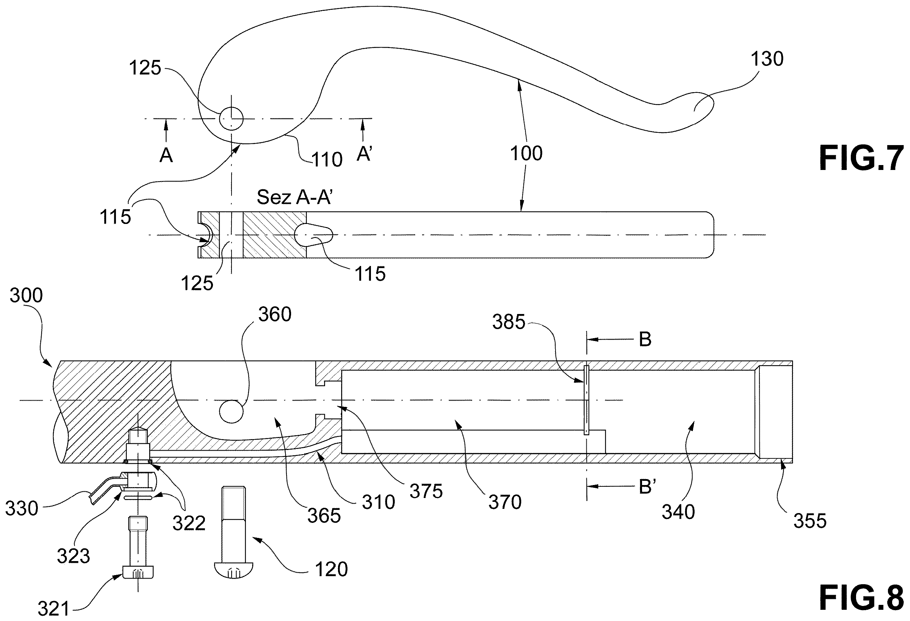

Referring to Fig. 8, according to one aspect of the present invention, each of said one or more brakes includes a seat 365 for a brake lever 100. The seat 365 is positioned between the first end 300E1 and the second end 300E2 of the tubular handlebar body 300 and it is inside the tubular handlebar body but open from the front side 1000F of the handlebar.

Also referring to Fig. 6, a corresponding brake lever 100 is pivoted in the seat 365 with a first portion (also called the "foot" of the lever) while a second gripping portion remains external to the handlebar body 300 and has a free end 130 (or "gripping portion") directed towards the first end 300E1 or towards the second end 300E2 of the tubular handlebar body. Typically, the free end 130 is directed towards the first 300E1 or the second end 300E2, which corresponds to the free end of the tubular handlebar body on the right or on the left.

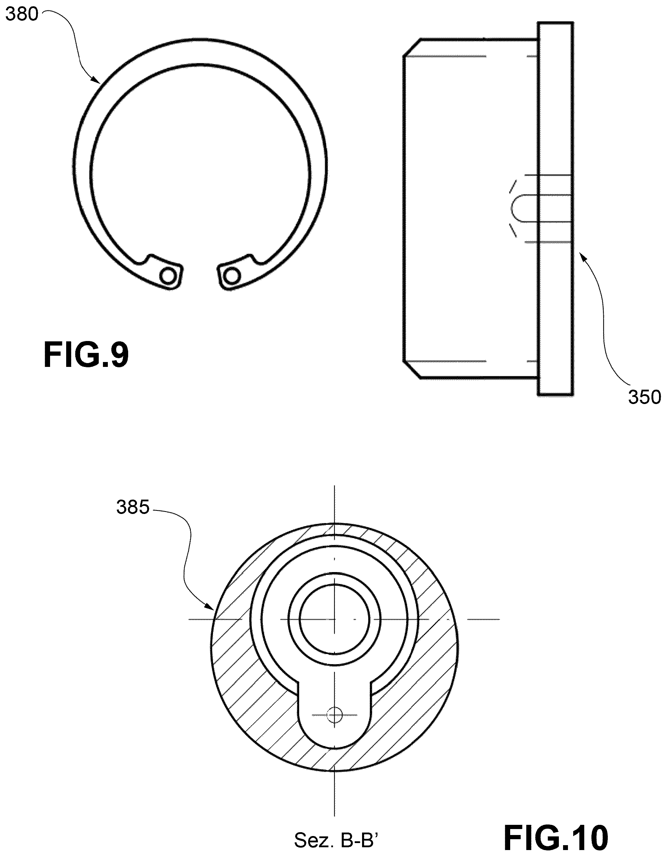

The brake installed in the handlebar 1000 according to an embodiment of the present invention comprises a hydraulic pump 200 operating with a hydraulic fluid, entirely inside the handlebar (in Fig. 8 inserted in the seat 370 which on one side has an outlet 375 in the seat of the foot of the lever 365 and on the other a seat 385 of an elastic stop 380 - see also Fig. 9 - of the entire pump 200).

For the purpose of driving the hydraulic pump 200, a thrust ball 210 is provided at that seat 365 of the lever. The ball 210 is placed in dynamic contact (i.e., a contact guaranteed by pushing forces and not by a mechanical connection) on one side with the foot of the lever 100 and on the other with a hydraulic brake piston assembly 220. According to one aspect of the invention, the brake lever foot 100 has an eccentric profile portion 110 configured so that when the free end 130 is moved from a neutral position P1 to a clamped position P2 towards the first end or towards the second end, it pushes on the thrust ball 210 and through it the piston assembly 220.

According to one aspect of the invention, the piston assembly 220 includes an oil chamber 200C, preferably in the shape of a cylindrical ring. An outflow cavity leads into said chamber 220C. The outflow cavity 221 is connected, on the other side, to an outflow channel 230 of the hydraulic pump. The outflow channel is preferably internal to the piston assembly 220 and it is fluidly connected to a passage channel 310 of the hydraulic fluid in the handlebar body 300. An outflow valve 320 of the hydraulic fluid with an outlet connected to the outflow pipe 330 towards the brake caliper or other device is also supplied on the handlebar according to an embodiment of the present invention.

The piston is conveniently dynamically contrasted on the opposite side of the thrust ball 210 along the extension line X, by means of suitable elastic contrast media. For example, contrast media (always positioned in the seat 370) can consist of a return spring 245 inside the tubular handlebar body 300. The return spring 245 is preferably arranged in a seat 240.

The end of the thrust spring towards the free end of the tubular handlebar body 300E1 or 300E2 contrasts with the elastic stop 380. In a line towards the free end of the tubular handlebar body (first or second depending on the case) there is a fixed element that can be conveniently made up of a threaded cap 226 with appropriate gaskets 225. When the cap includes a through hole, it is closed by a loading and topping up screw 227 of the hydraulic fluid inserted on the opposite side of the spring end.

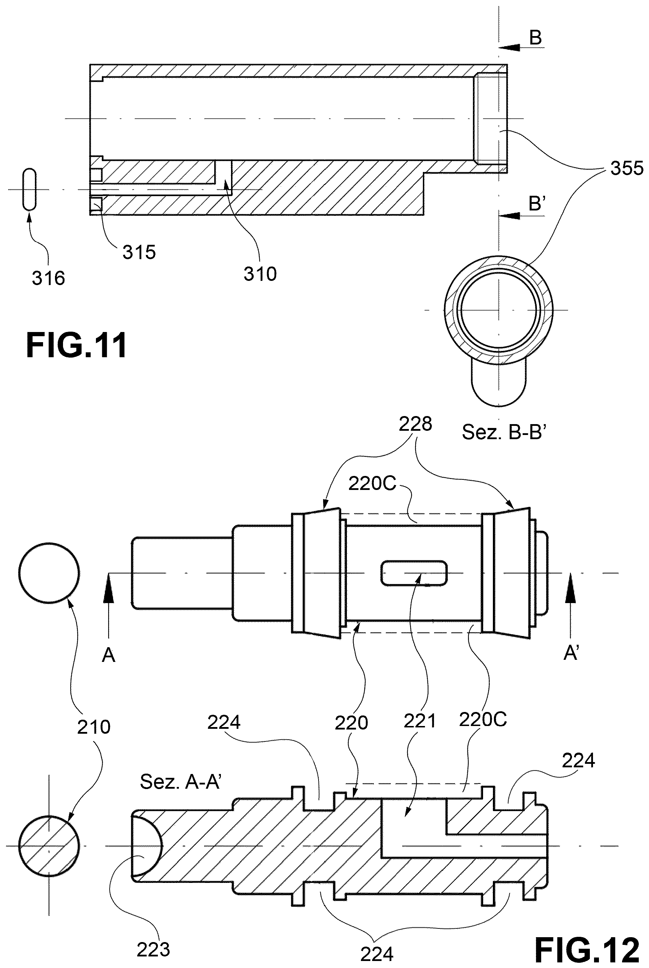

Fig. 12 shows the pump body 220 (piston), the outflow tank 221 between two gaskets 228 of the pumping element, according to an aspect of the invention. The (partial) seat 223 in the piston 220 of the thrust ball 210 is visible. The seats 224 for the piston gaskets 228 are also visible, as well as the cylindrical ring-shaped chamber 220C.

Fig. 11 shows the empty section of the portion of the tubular handlebar body in which the piston body 220 is inserted, with the passage channel 310 where a gasket 316 is placed at the outlet in the corresponding seat 315. The threaded seat 355 of the cap 350 of the free end of the handlebar 300 is also shown.

In Fig. 6 a free or "residual" cavity 340 between the end of the return spring and the cap 350 is shown.

Figure 8 shows some further details according to an embodiment of the invention. In particular, the outflow valve 320 of pressurized oil, where the assembly screw of the flow valve 321, the O-ring 322 and the banjo-type hydraulic connector 323 are distinguished according to one aspect of the invention. It is also shown the pin 120 of the lever 100, which fits into the hole 125 of the lever (Fig. 7) and into the threaded seat 360 of the lever pin in the tubular handlebar body.

According to a preferred embodiment, the eccentric profile part 110 of the lever 100 has a section formed as a rolling groove 115 of the thrust ball 210.

Preferably, the wheeled vehicle is a bicycle.

Based on the description of the embodiments above, from a functional point of view, the cyclist, acting on the brake lever, will bring it from an initial neutral position at zero pressure up to a final position of maximum exercise at maximum pressure, determining a retreat of the pump piston which, under the action of the pump seal, will pressurize the hydraulic fluid contained within the first stage of the hydraulic oil tank volume. The fluid, crossing the outflow cavity, will pour into a second stage of pressurization volume and hydraulic oil outflow which, finding as the only way out that of the passage channel of the hydraulic fluid in the handlebar body, will reach the user (brake caliper or hydraulic actuator of different nature) through a traditional hydraulic connection pipe.

### Advantages of the invention

The advantages of the lever integrated in the handlebar that acts directly on the pump body, can be of the following three types.

### Active safety: braking modulation

Since the lever pivoted in the handlebar is directly in contact with the ball and since the foot of the lever has an eccentric shape, the action on the piston may vary depending on the shape that is given to the eccentric. It will therefore be possible to produce different lever models with different shapes of the eccentric according to the desired braking action. This peculiarity determines different reaction times which can be translated into reduced braking distances compared to all current hydraulic systems, which only allow a linear progression whose modulation takes place exclusively through the manual action of the cyclist.

### Mechanical safety: protection from bumps and falls

The combination of the lever pivoted in the handlebar bar (therefore without external support) with the pump unit housed inside it makes the unit absolutely protected from any risk resulting from shocks or falls and atmospheric agents. In particular, this advantage is evident in sports use where the hydraulic brake system is more widespread (see MTB bicycles) and where mud and water infiltrations cause malfunctions and reduce the life of the components.

### Production economics

Unlike the products of the prior art, the handlebar according to the invention consists of a smaller number of mechanical parts. Furthermore, the pump body can be a single model for both sides of the handlebar so, in case of replacement, it is not necessary to have the pair made up of the two left and right pump bodies as is the case for other models on the market.

### List of symbols in the figures

1000 = handlebar or tubular
1000F = Front side of the handlebar or tubular
1000R = Rear side of the handlebar or tubular
100 = Brake lever
P1 = Neutral position of the brake lever
P2 = Clamped position of the brake lever
110 = Eccentric profile of the foot of the lever
115 = Rolling groove of the thrust ball as profile of the foot of the lever
120 = Fulcrum of the brake lever
125 = Fulcrum hole in the lever
130 = Free end of the brake lever
200 = Hydraulic pump body
210 = Thrust ball
220 = Pumping piston assembly
220C = External chamber for oil bath
221 = Outflow cavity
223 = Hollow ball seat in the piston
224 = Seat of the pump gaskets
225 = Gaskets
226 = Threaded plug for closing and assembly of the pump
227 = Hydraulic fluid loading and topping up screw
228 = Pump gaskets
230 = Pump outflow channel towards the outside of the pump, connected to channel 310
240 = Return spring seat
245 = Return spring (example of elastic biasing media)
300 = Tubular handlebar body
300E1 = First end of the tubular handlebar body
300E2 = Second end of the tubular handlebar body
310 = Hydraulic fluid passage channel, between the pump and the outside of the tubular
315 = Sealing O-ring Seat
316 = Watertight O-ring between pump body and handlebar
320 = Pressurized oil outflow valve
321 = Flow valve assembly screw
322 = O-ring
323 = Banjo type Hydraulic connector
330 = outflow pipe
340 = Residual cavity
350 = Threaded cap for closing the outer end of the handlebar body
355 = Threaded seat of the closure cap
360 = Threaded seat of the lever pin
365 = Cavity of the lever seat
370 = Cavity of the seat of the hydraulic pump body
375 = Window or outlet facing of the piston towards the cavity of the lever housing
380 = Elastic stop of the hydraulic pump
385 = Seat of the elastic latch of the hydraulic pump
450 = Pressurized oil outflow pipe towards the brake caliper or other device
600 = Handlebar 100 fitting element to the bicycle (not shown)
650 = Gripping sleeve at handlebar 100 of connecting element 600

Preferred embodiments have been described above and variants of the present invention have been suggested, but it is understood that those skilled in the art may make modifications and changes without departing from the scope of protection, as defined by the annexed claims.

## Claims

1. A handlebar (1000) with integrated hydraulic brakes for a wheeled vehicle, comprising a tubular handlebar body (300) extending from a first end to a second end along an extension line (X), as well as one or more brakes on a front side of the tubular handlebar body, opposite to a rear side of the tubular handlebar body, wherein each of said one or more brakes comprises:
- a seat (365) in the handlebar for a brake lever (100), the seat (365) being positioned between the first end and the second end of the handlebar, the seat (365) being open on the front side of the tubular handlebar body;
- a brake lever (100) with a first portion pivoted in the seat (365) and a second gripping portion which is outside the tubular handlebar body (300) and has a free end (130) directed towards the first end or towards the second end;
the handlebar (1000) being **characterized in that** there is a hydraulic pump (200) operating with a hydraulic fluid in each of said one or more brakes, and:
- a thrust ball (210) in said seat (365) in contact, on one side, with said first portion of the brake lever (100), wherein said first portion of the brake lever has an eccentric profile part (110) configured so that, when the free end (130) is moved towards the first end or towards the second end, it pushes on the thrust ball, and on the other side, with a hydraulic brake piston (220);
- the hydraulic brake piston (220) operated by the thrust ball (210);
- an outflow channel (230) of the hydraulic pump connected to a passage channel (310) of the hydraulic fluid into the tubular handlebar body (300);
- an outflow valve (320) of the hydraulic fluid with an outlet (330) towards a brake caliper or another device.

2. A handlebar (1000) according to claim 1, wherein the hydraulic brake piston (220) is biased by elastic biasing means (245) inside the tubular handlebar body (300) on the side opposite to the thrust ball (210) along the extension line (X).

3. A handlebar (1000) according to claim 2, wherein the elastic biasing means comprise or consist of a return spring (245).

4. A handlebar (1000) according to one or more of claims 1 to 3, wherein said hydraulic brake piston (220) comprises a cylindrical ring-shaped chamber (220C) where an outflow cavity (221) opens, which in turn is fluidly connected to the outflow channel (230), the outflow channel (230) being fluidly connected to said outflow valve (320).

5. A handlebar (1000) according to one or more of claims 1 to 4, wherein the eccentric profile part (110) has a section formed as a rolling groove (115) of the thrust ball (210).

6. A handlebar (1000) according to one or more of claims 1 to 5, wherein the wheeled vehicle is a bicycle.

7. A wheeled vehicle provided with a handlebar (1000), wherein said handlebar is the handlebar according to one or more of claims 1 to 6.

8. A wheeled vehicle according to claim 7, wherein said wheeled vehicle is a bicycle.

## Patentansprüche

1. Lenker (1000) mit integrierten hydraulischen Bremsen für ein Radfahrzeug, umfassend einen rohrförmigen Lenkerkörper (300), der sich von einem ersten Ende bis zu einem zweiten Ende entlang einer Erstreckungslinie (X) erstreckt, sowie eine oder mehrere Bremsen an einer Vorderseite des rohrförmigen Lenkerkörpers, die einer Rückseite des rohrförmigen Lenkerkörpers gegenüberliegen, wobei jede der einen oder mehreren Bremsen umfasst:
einen Sitz (365) in dem Lenker für einen Bremshebel (100), wobei der Sitz (365) zwischen dem ersten Ende und dem zweiten Ende des Lenkers positioniert wird, wobei der Sitz (365) an der Vorderseite des rohrförmigen Lenkerkörpers offen ist;
einen Bremshebel (100) mit einem ersten Abschnitt, der in dem Sitz (365) drehbar gelagert ist, und einem zweiten Greifabschnitt, der sich außerhalb des rohrförmigen Lenkerkörpers (300) befindet und ein freies Ende (130) aufweist, das zu dem ersten Ende oder zu dem zweiten Ende gerichtet ist;
der Lenker (1000) **dadurch gekennzeichnet, dass** sich eine Hydraulikpumpe (200), die mit einer Hydraulikflüssigkeit arbeitet, in jeder der einen oder mehreren Bremsen befindet, und:
- eine Druckkugel (210) in dem Sitz (365), die einerseits mit dem ersten Abschnitt des Bremshebels (100) in Kontakt steht, wobei der erste Abschnitt des Bremshebels einen exzentrischen Profilteil (110) aufweist, der dazu konfiguriert ist, beim Bewegen des freien Endes (130) zu dem ersten Ende oder zu dem zweiten Ende, auf die Druckkugel zu drücken und andererseits mit einem hydraulischen Bremskolben (220);
- der hydraulische Bremskolben (220) wird durch die Druckkugel (210) betätigt;
ein Auslasskanal (230) der Hydraulikpumpe, der mit einem Durchgangskanal (310) der Hydraulikflüssigkeit in den rohrförmigen Lenkerkörper (300) verbunden ist;
ein Auslassventil (320) der Hydraulikflüssigkeit mit einem Auslass (330) zu einem Bremssattel oder einer anderen Vorrichtung.

2. Lenker (1000) nach Anspruch 1, wobei der hydraulische Bremskolben (220) durch elastische Schubelemente (245) innerhalb des rohrförmigen Lenkerkörpers (300) auf der Seite, die der Druckkugel (210) gegenüberliegt, entlang der Längsachse (X) gedrückt wird.

3. Lenker (1000) nach Anspruch 2, wobei die elastischen Schubelemente eine Rückstellfeder (245) umfassen oder daraus bestehen.

4. Lenker (1000) nach einem der Ansprüche 1 bis 3, wobei der hydraulische Bremskolben (220) eine zylindrische ringförmige Kammer (220C) umfasst, in der sich ein Auslasshohlraum (221) öffnet, die ihrerseits in Fluidverbindung mit dem Auslasskanal (230) steht, wobei der Auslasskanal (230) in Fluidverbindung mit dem Auslassventil (320) steht.

5. Lenker (1000) nach einem der Ansprüche 1 bis 4, wobei der exzentrische Profilteil (110) einen Abschnitt aufweist, der als Rollennut (115) der Druckkugel (210) ausgebildet ist.

6. Lenker (1000) nach einem der Ansprüche 1 bis 5, wobei das Radfahrzeug ein Fahrrad ist.

7. Radfahrzeug, das mit einem Lenker (1000) versehen ist, wobei der Lenker der Lenker nach einem der Ansprüche 1 bis 6 ist.

8. Radfahrzeug nach Anspruch 7, wobei das Radfahrzeug ein Fahrrad ist.

## Revendications

1. Guidon (1000) avec freins hydrauliques intégrés pour un véhicule à roues, comprenant un corps de guidon tubulaire (300) s'étendant d'une première extrémité à une seconde extrémité le long d'une ligne d'extension (X), ainsi qu'un ou plusieurs freins sur un côté avant du corps de guidon tubulaire, opposé à un côté arrière du corps de guidon tubulaire, chacun desdits un ou plusieurs freins comprenant :
un logement (365) dans le guidon pour un levier de frein (100), le logement (365) étant positionné entre la première extrémité et la seconde extrémité du guidon, le logement (365) étant ouvert sur le côté avant du corps de guidon tubulaire ;
un levier de frein (100) avec une première portion montée pivotante dans le logement (365) et une seconde portion de préhension qui est à l'extérieur du corps de guidon tubulaire (300) et présente une extrémité libre (130) dirigée vers la première extrémité ou vers la seconde extrémité ;
le guidon (1000) étant **caractérisé en ce qu'**il y a une pompe hydraulique (200) fonctionnant avec un fluide hydraulique dans chacun desdits un ou plusieurs freins, et :
une bille de poussée (210) dans ledit logement (365) en contact, d'un côté, avec ladite première portion du levier de frein (100), ladite première portion du levier de frein présentant une partie de profil excentrique (110) configurée de manière que, lorsque l'extrémité libre (130) est déplacée vers la première extrémité ou vers la seconde extrémité, elle pousse sur la bille de poussée, et, de l'autre côté, avec un piston de frein hydraulique (220) ;
le piston de frein hydraulique (220) étant actionné par la bille de poussée (210) ;
un canal d'écoulement (230) connecté à un canal (310) de la pompe hydraulique pour le passage du fluide hydraulique dans le corps de guidon tubulaire (300) ;
une soupape d'écoulement (320) du fluide hydraulique avec une sortie (330) vers un étrier de frein ou un autre dispositif.

2. Guidon (1000) selon la revendication 1, dans lequel le piston de frein hydraulique (220) est sollicité par des moyens de rappel élastiques (245) à l'intérieur du corps de guidon tubulaire (300) du côté opposé à la bille de poussée (210) le long de la ligne d'extension (X).

3. Guidon (1000) selon la revendication 2, dans lequel les moyens de rappel élastiques comprennent ou consistent en un ressort de rappel (245).

4. Guidon (1000) selon l'une quelconque des revendications 1 à 3, dans lequel ledit piston de frein hydraulique (220) comprend une chambre annulaire cylindrique (220C) dans laquelle s'ouvre une cavité d'écoulement (221), qui est à son tour connectée en fluide au canal d'écoulement (230), le canal d'écoulement (230) étant connecté en fluide à ladite soupape d'écoulement (320).

5. Guidon (1000) selon l'une quelconque des revendications 1 à 4, dans lequel la partie de profil excentrique (110) présente une section formée en gorge de roulement (115) de la bille de poussée (210).

6. Guidon (1000) selon l'une quelconque des revendications 1 à 5, dans lequel le véhicule à roues est une bicyclette.

7. Véhicule à roues muni d'un guidon (1000), dans lequel ledit guidon est le guidon selon l'une quelconque des revendications 1 à 6.

8. Véhicule à roues selon la revendication 7, dans lequel ledit véhicule à roues est une bicyclette.
